# EUROPÄISCHE PATENTSCHRIFT

(11) **EP 0 716 488 B1**
(45) Veröffentlichungstag und Bekanntmachung des Hinweises auf die Patenterteilung: **14.07.1999**
(21) Anmeldenummer: 95118044.7
(22) Anmeldetag: 16.11.1995
(51) Int. Cl.: H02B 13/035

(54) **Hochspannungssteckkontakt**
High voltage connector
Raccordement électrique à haute tension

(30) Priorität: 08.12.1994 DE 4445082
(43) Veröffentlichungstag der Anmeldung: 12.06.1996
(73) Patentinhaber: Kommanditgesellschaft Ritz Messwandler GmbH & Co., 20251 Hamburg (DE)
(72) Erfinder: Brockmann, Olaf, Dipl.-Ing., D-22359 Hamburg (DE); Pscheidl, Jörg, Dipl.-Ing., D-22415 Hamburg (DE)
(74) Vertreter: Vonnemann, Gerhard, Dr.-Ing.

(56) Entgegenhaltungen:
- EP-A- 0 148 394
- EP-A- 0 487 025
- DE-A- 3 211 119
- DE-A- 3 538 193
- DE-A- 3 935 360
- DE-A- 4 239 648
- DE-A- 4 312 618
- DE-U- 8 502 491
- DE-U- 9 012 016
- DE-U- 9 420 191
- FR-A- 2 445 634

## Beschreibung

Die Erfindung betrifft einen Hochspannungssteckkontakt für den Einbau in ein Gehäuse, vorzugsweise ein Wandlergehäuse, insbesondere als Gegenstück zu einem Außenkonus-Kabelanschluß gemäß DIN 47636 einer Schaltanlage.

Um bei Schaltanlagen ein Meßsignal, insbesondere für Spannung oder Strom, abnehmen zu können, ist es üblich, einen entsprechenden Meßwandler über ein längeres Zwischenkabel an der Schaltanlage anzuschließen. Eine solche Verkabelung ist technisch aufwendig und teuer. Zur Vermeidung dieses Nachteils ist aus G 90 12 016 bekannt, den Meßwandler direkt steckbar auszubilden, wobei zu diesem Zweck am Wandler ein Außenkonus vorgesehen ist. Durch die veränderten Einbauverhältnisse kommt es jedoch zu räumlichen Schwierigkeiten, die u.a. auch Teilentladungsprobleme in den Steckverbindungen mit sich bringen.

Aus der DE-A-3 211 119 ist ein Hochspannungssteckkontakt mit einem elastischen Isolierteil bekannt, in das zur Vermeidung von Entladungen Feldsteuerungskappen aus Metall eingebettet sind, die mit dem hochspannungsführenden Leiter fest verbunden sind. Aus der DE-U-8 502 491 ist ein Hochspannungssteckkontakt mit einem buchsenförmigen Isolierkörper aus Elastomer bekannt, in dessen Mitte ein Feldsteuerkörper eingebettet und mit dem Leiter verbunden ist.

Aufgabe der Erfindung ist es, eine teilentladungssichere Steckverbindung anzugeben. Die Aufgabe wird durch die Merkmale des Patentanspruchs 1 gelöst. Die erfindungsgemäß ausgestalteten Steuerelektroden sind nicht vollständig in der Mitte des Isolierteils eingebettet, sondern an dessen stirnseitigen Enden offen angeordnet, so daß sie aufgrund ihrer Elastizität ohne besondere Befestigungsmaßnahmen bei der Montage des Isolierteils von selbst auf der einen Seite mit dem hochspannungsführenden Kontakt und auf der anderen Seite mit dem erdpotentialführenden Gehäuse in leitende Verbindung treten. Durch die beidseitige Ausbildung der Steuerelektroden und durch deren Elastizität, die Luftspalte erst garnicht entstehen läßt, wird die Neigung zu Teilentladungen verringert.

Weitere vorteilhafte Ausgestaltungen sind in den Unteransprüchen 2 bis 7 beschrieben. Ein üblicher Wandler mit rechteckigem Wandlerkörper kann durch Änderung der Formgebung des Wandlerkörpers entsprechend z.B. den Ansprüche 8 bis 11 an die Erfordernisse der Erfindung anpaßbar sein.

Weitere Vorteile und Einzelheiten der Erfindung ergeben sich aus der nachfolgenden Beschreibung von Ausführungsbeispielen anhand der Zeichnung in Verbindung mit den Unteransprüchen.

Es zeigen:
- Fig. 1: eine Teilansicht einer gasisolierten Schaltanlage mit Meßwandler,
- Fig. 2 und 3: Anordnungsbeispiele des erfindungsgemäßen Meßwandlers,
- Fig. 4: der erfindungsgemäße Meßwandler in der Draufsicht,
- Fig. 5 und 6: zwei Ausführungsbeispiele des Meßwandlers in der Seitenansicht,
- Fig. 7: einen Schnitt durch die erfindungsgemäße Steckverbindung,
- Fig. 8: eine Draufsicht auf das Kautschukteil und
- Fig. 9: einen Schnitt durch das Kautschukteil.

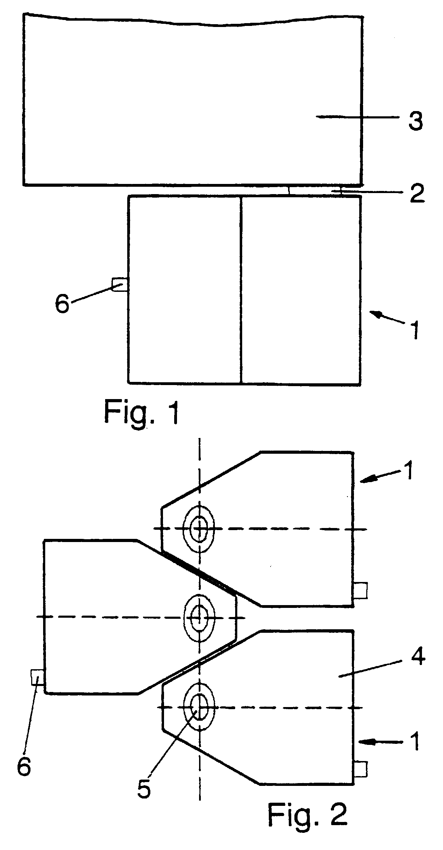

Figur 1 zeigt einen Meßwandler 1, der am Ort eines Außenkonus-Kabelanschlusses 2, von einer Schaltanlage mit einem Gehäuse 3 angeordnet ist. Bei der Schaltanlage 3 kann es sich beispielsweise um eine gasisolierte Schaltanlage handeln. Der Meßwandler 1 ist direkt am Gehäuse der Schaltanlage 3 innerhalb des Kabelraumes oder direkt auf den Sammelschienen angeordnet.

Figur 2 zeigt die Schaltanlage gemäß Figur 1 aus einer Ansicht von oben. Die Schaltanlage weist drei Außenkonus-Kabelanschlüsse 2 auf, die in einer Reihe angeordnet sind. Alle drei Außenkonus-Kabelanschlüsse 2 sind mit Meßwandlern 1 belegt. In dieser Ansicht ist die platzsparende Formgebung des Meßwandlers 1 gut zu erkennen. Der Wandlerkörper 4 ist direkt am Gehäuse der Schaltanlage 3 anschraubbar ausgestaltet. Der Wandlerkörper 4 ist zu den Seiten der anderen Außenkonus-Kabelanschlüsse 2 hin von der Rechteckform abweichend ausgestaltet, so daß die anderen Außenkonus-Kabelanschlüsse 2 frei zugänglich sind.

Die Abweichung von der Rechteckform ist z.B. durch eine Schräge gegeben. Da im vorliegenden Beispiel eine Mehrzahl von Außenkonus-Kabelanschlüssen in Reihe angeordnet vorliegen, weist der Wandlerkörper 4 einen Vorsprung z.B. nach Art eines Dreiecks auf. Desweiteren ist am Wandlerkörper 4 ein Anschluß 6 für das sekundärseitige Meßsignal vorgesehen, an dem eine Meßleitung anschließbar ist.

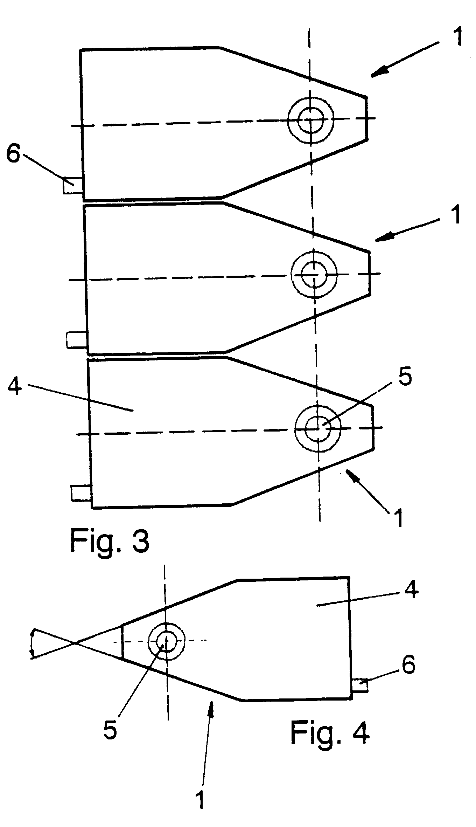

Figur 3 zeigt eine parallele Anordnung von Meßwandlern 1 an der Schaltanlage.

Figur 4 zeigt einen Meßwandler 1 aus Figur 2 mit Blick auf die Signaleinkoppelstelle 5. Der in Dreieckform ausgebildete Vorsprung weist einen Winkel α auf, der der Aufstellung auf der Anlage entspricht. Der Winkel α beträgt 40°. Zur Abnahme eine elektrischen Signals von dem Außenkonus-Kabelanschluß 2 weist der Meßwandler 1 eine Signaleinkoppelstelle 5 auf, die bei Anordnung des Wandlerkörpers 4 am Gehäuse der Schaltanlage 3 zu einer elektrischen Signalauskoppelstelle des Außenkonus-Kabelanschlusses 2 paßt.

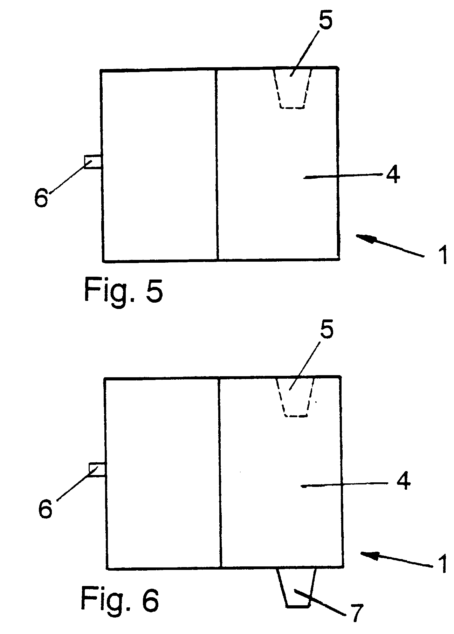

Figur 5 zeigt dazu einen Meßwandler 1, bei dem die Signaleinkoppelstelle 5 ein elektrischer Kontakt, insbesondere ein Steckteil, ist. Der Meßwandler 1 ist in dieser Ausführung als Spannungswandler ausgeführt.

Figur 6 zeigt einen Meßwandler 1 in Form des Meßwandlers aus Figur 5, bei dem zusätzlich zur Signaleinkoppelstelle 5, an der gegenüberliegenden Seite eine Signalauskoppelstelle 7 angeordnet ist. Auf diese Weise kann an dem als Spannungswandler ausgebildeten Meßwandler 1 trotz Belegung eines Kabelanschlusses an einer Schaltanlage ein Kabel an die Signalauskoppelstelle 7, welche im übrigen auch als Schraubverbindung ausgebildet sein kann, angeschlossen werden. Dazu sind die Signaleinkoppelstelle 5 und die Signalauskoppelstelle 7 innerhalb des Meßwandlers 1 elektrisch leitend miteinander verbunden. Darüber hinaus ist es auch möglich, den Meßwandler 1 als Stromwandler auszubilden. Dazu kann zwischen Signalein- 5 und Signalauskoppelstelle 7 die Primärwicklung eines Meßkernes geschaltet werden.

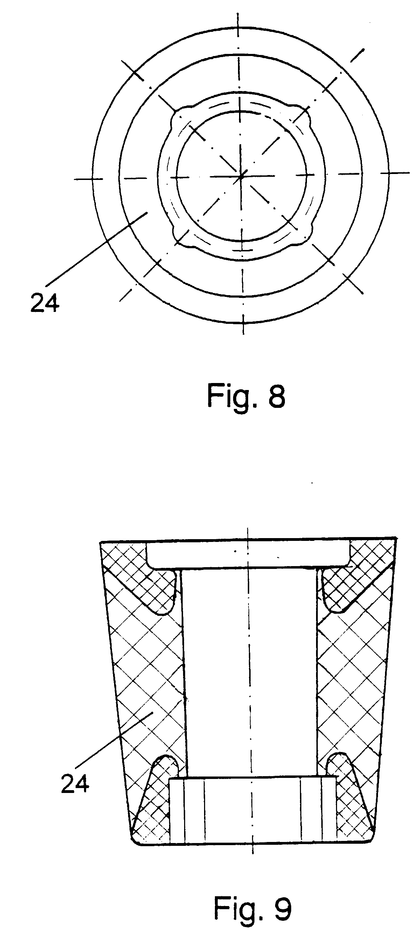

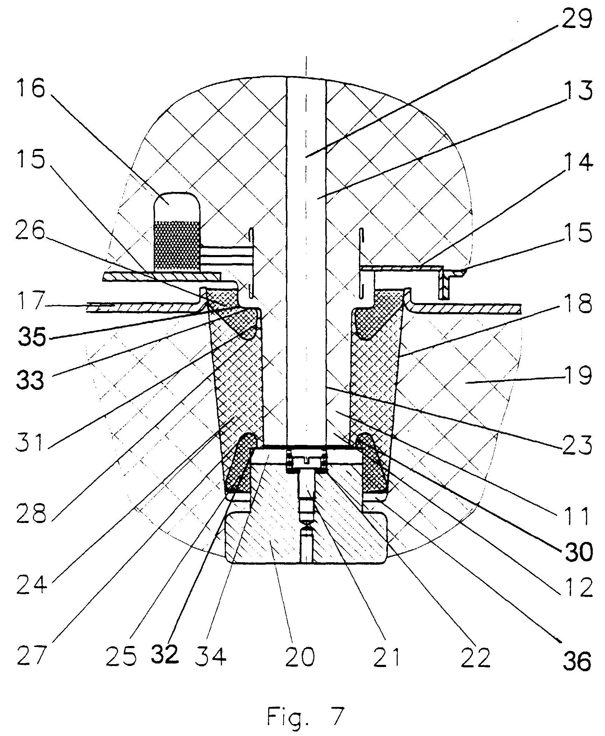

Figur 7 zeigt einen Schnitt durch die erfindungsgemäße Steckkontaktverbindung. Mit 11 ist ein Außenkonusteil gemäß DIN 47636 dargestellt. Es besteht aus einer äußeren isolierenden Kunststoffhülle 12 mit einem inneren zentrisch angeordneten hochspannungspotentialführenden metallischen Leiter 13. In Figur 7 sind zwei Befestigungsmöglichkeiten dieses Außenkonusteils 11 dargestellt. Entweder kann es an einem tellerförmigen Kragen 14 mit dem erdpotentialführenden Gehäuse 15 der Schaltanlage verschweißt werden oder aber als Eingießteil mit einer Eingießbuchse 16 zur Erddurchsteuerung leitend verbunden werden.

Mit 17 ist das Gehäuse eines Spannungswandlers gekennzeichnet, in dem eine Mulde 18 in der isolierenden Vergußmasse 19 vorgesehen ist. Am Grund der Mulde 18 ist ein potentialführender Kontakt 20 angegossen, von dem durch eine nicht näher dargestellte Kabelverbindung das Potential abgegriffen werden kann. An dem oberen Ende des Teils 20 ist mittels einer Schraube 21 eine Feder 22 befestigt, die leitend gegen das stirnseitige Ende des Leiters 13 drückt und auf diese Weise den Potentialabgriff ermöglicht.

Statt der Schraube 21 kann auch ein Stift befestigt werden, der in die zylindrische Buchse 23 eingreift und auf diese Weise die leitende Verbindung herstellt.

Das elastische Isolierteil 24 besteht aus Silikonkautschuk und weist am stirnseitigen unteren Ende eine untere Steuerelektrode 25 und am oberen Ende eine obere Steuerelektrode 26 auf. Die Steuerelektroden 25, 26 sind ringförmig ausgebildet und weisen eine keglige Form als Querschnitt auf, wobei die Kegelspitzen 27, 28 abgerundet sind. Zum Zentrum hin, geht diese Rundung in eine zur Achse 29 in etwa parallele Seitenwandung 30 bzw. 31 über. Die Seitenwandungen 30, 31 verändern ihren Durchmesser sprungförmig, so daß sie Schultern 32 und 33 bilden. Schulter 33 legt sich beim Einstecken gegen das Außenkonusteil 11 an, während Schulter 32 sich gegen den eingegossenen potentialführenden Kontakt 20 anlegt. Sowohl im potentialführenden Kontakt 20 als auch in dem elastischen Isolierteil 24 sind Entlüftungskanäle 34 und 35 vorgesehen, die beim Einstecken bzw. Herausziehen des Steckers für eine Be- bzw. Entlüftung sorgen. Über die Schulter 32 erhält die untere Steuerelektrode 25 das Potential des eingegossenen potentialführenden Kontaktes 20, während durch Anlage der oberen Steuerelektrode 26 an den nach oben gewölbten Rand des Wandlergehäuses 17 der Kontakt zum Erdpotential des Wandlergehäuses 17 hergestellt wird.

Ein wesentliches Merkmal der vorliegenden Erfindung ist, daß der Meßwandler 1 eine Signalauskoppelstelle 7 aufweist, die zur Abnahme des elektrischen Signals direkt an den Außenkonus-Kabelanschluß gemäß DIN 46737 der Schaltanlage anschließbar ist.

Störende Zwischenverbindungen zwischen dem Meßwandler und dem Kabelanschluß entfallen gegenüber dem bekannten Stand der Technik.

### Bezugszeichenliste

- 1: Meßwandler
- 2: Außenkonus-Kabelanschluß
- 3: Schaltanlage
- 4: Wandlerkörper
- 5: Signaleinkoppelstelle
- 6: Anschluß
- 7: Signalauskoppelstelle
- 11: Außenkonusteil gemäß DIN 47636
- 12: Kunststoffhülle
- 13: Leiter
- 14: Kragen
- 15: Gehäuse der Schaltanlage
- 16: Eingießbuchse
- 17: Spannungswandlergehäuse
- 18: Mulde
- 19: Vergußmasse
- 20: potentialführender Kontakt
- 21: Schraube
- 22: Feder
- 23: Buchse
- 24: elastisches Isolierteil
- 25: untere Steuerelektrode
- 26: obere Steuerelektrode
- 27: Kegelspitze
- 28: Kegelspitze
- 29: Achse
- 30: Seitenwandung
- 31: Seitenwandung
- 32: Schulter
- 33: Schulter
- 34: Lüftungskanal
- 35: Lüftungskanal
- 36: Ausgleichsraum

## Patentansprüche

1. Hochspannungssteckkontakt für den Einbau in ein Gehäuse (17), mit einem elastischen Isolierteil (24), das im wesentlichen zylindrisch oder leicht konisch ausgebildet ist und stirnseitig eingeformte leitende Steuerelektroden (25, 26) aufweist, **dadurch gekennzeichnet,** daß die Steuerelektroden (25, 26) aus einem halbleitenden Elastomermaterial bestehen und stirnseitig in das Isolierteil (24) eingeformt sind, daß eine Steuerelektrode (26) mit einem erdpotentialführenden Teil, vorzugsweise dem Gehäuse (17), und die andere Steuerelektrode (25) mit dem potentialführenden Kontakt (20) in leitender Verbindung tretend ausgebildet ist.

2. Hochspannungssteckkontakt nach Anspruch 1, **dadurch gekennzeichnet,** daß die Steuerelektroden (25, 26) als Ring mit einem im wesentlichen kegelförmigen Querschnitt ausgebildet ist, dessen Spitze (27, 28) abgerundet ist, und dessen zum Zentrum gerichtete Seitenwand (30, 31) vorzugsweise parallel zur Steckerachse (29) geführt ist.

3. Hochspannungssteckkontakt nach Anspruch 1 oder 2, **dadurch gekennzeichnet,** daß die Steuerelektrode (25, 26) ein Entlüftungssystem (35) aufweist.

4. Hochspannungssteckkontakt nach einem der vorhergehenden Ansprüche, **dadurch gekennzeichnet,** daß die Mulde (18) einen oder mehrere Volumenausgleichsräume (36) aufweist.

5. Hochspannungssteckkontakt nach Anspruch 4, **dadurch gekennzeichnet,** daß die Gestaltung der Steuerelektroden (25, 26) die Volumenausgleichsräume (36) elektrisch entlastet.

6. Hochspannungssteckkontakt nach einem der vorhergehenden Ansprüche, **dadurch gekennzeichnet,** d a d u r c h g e k e n n z e i c h n e t, daß das elastische Isolierteil (24) in eine eingegossene Mulde (18) eines Wandlergehäuses (17) einlegbar ist.

7. Hochspannungssteckkontakt nach einem der vorhergehenden Ansprüche, **dadurch gekennzeichnet,** daß im Grund der Mulde (18) ein potentialführender Kontakt (20) als Potentialabgriff vorgesehen ist.

8. Hochspannungssteckkontakt nach einem der vorhergehenden Ansprüche, **dadurch gekennzeichnet,** daß er zur Abnahme eines elektronischen Signals am Ort eines Außenkonus-Kabelanschlusses (2) durch einen Meßwandler (1) verwendet wird, wobei der Wandlerkörper (4) wenigstens zur Seite des nächsten Kabelanschlusses von einer Rechteckform abweichend ausgestaltet ist derart, daß der nebenliegende Kabelanschluß frei belegbar ist.

9. Hochspannungssteckkontakt nach einem der vorhergehenden Ansprüche, **dadurch gekennzeichnet,** daß der Wandlerkörper (4) zur Abnahme des elektrischen Signals eine elektrische Signaleinkoppelstelle (5) umfaßt, die bei Anordnung des Wandlerkörpers (4) am Gehäuse der Schaltanlage (3) zu einer elektrischen Signalauskoppelstelle (7) des Außenkonus-Kabelanschlusses (2) paßt.

10. Hochspannungssteckkontakt nach einem der vorhergehenden Ansprüche, **dadurch gekennzeichnet,** daß die elektrische Signaleinkoppelstelle (5) ein elektrischer Kontakt ist, der zu einem Gegenkontakt am Außenkonus-Kabelanschluß (2) als elektrische Signalauskoppelstelle (7) paßt.

11. Hochspannungssteckkontakt nach einem der vorhergehenden Ansprüche, **dadurch gekennzeichnet,** daß die elektrische Signaleinkoppelstelle (5) das erste Glied einer galvanisch trennenden Koppelstelle ist, deren Glied die Signalauskoppelstelle (7) am Wandlerkörper (4) ist.

## Claims

1. High-voltage plug contact for installation in a housing (17), having an elastic insulating part (24) which is of essentially cylindrical or slightly conical design and has end-face moulded-in conducting control electrodes (25, 26), characterized in that the control electrodes (25, 26) are composed of a semiconducting elastomer material and are moulded into the insulating part (24) at the end face, and in that one control electrode (26) is designed to enter into conducting connection with an earth-potential-carrying part, preferably the housing (17) and the other control electrode (25) is designed to enter into conducting connection with the potential-carrying contact (20).

2. High-voltage plug contact according to Claim 1, characterized in that the control electrodes (25, 26) are designed as a ring having an essentially conical cross section whose tip (27, 28) is rounded off and whose side wall (30, 31) directed towards the centre is preferably aligned parallel to the plug axis (29).

3. High-voltage plug contact according to Claim 1 or 2, characterized in that the control electrode (25, 26) has a venting system (35).

4. High-voltage plug contact according to one of the preceding claims, characterized in that the depression (18) has one or more volume equalization spaces (36).

5. High-voltage plug contact according to Claim 4, characterized in that the design of the control electrodes (25, 26) removes electrical loading from the volume equalization spaces (36).

6. High-voltage plug contact according to one of the preceding claims, characterized in that the elastic insulating part (24) can be inserted into a cast depression (18) of a transformer housing (17).

7. High-voltage plug contact according to one of the preceding claims, characterized in that a potential-carrying contact (20) is provided in the base of the depression (18) as potential tapping.

8. High-voltage plug contact according to one of the preceding claims, characterized in that it is used for tapping off an electronic signal at the location of an outside-cone cable connection (2) by a measuring transformer (1), the transformer body (4) being of a design deviating from a rectangular shape at least towards the side of the next cable connection in such a way that the adjacent cable connection can be freely fitted.

9. High-voltage plug contact according to one of the preceding claims, characterized in that, to tap off the electrical signal, the transformer body (4) has an electrical signal coupling-in point (5) which, when the transformer body (4) is disposed on the housing of the switching station (3), it matches an electrical signal coupling-out point (7) of the outside-cone cable connection (2).

10. High-voltage plug contact according to one of the preceding claims, characterized in that the electrical signal coupling-out point (5) is an electrical contact which fits a countercontact on the outside-cone cable connection (2) as electrical signal coupling-out point (7).

11. High-voltage plug contact according to one of the preceding claims, characterized in that the electrical signal coupling-out point (5) is the first member of an electrically isolating coupling point whose member is the signal coupling-out point (7) on the transformer body (4).

## Revendications

1. Connecteur électrique à haute tension destiné à être monté dans un carter (17), avec une pièce élastique isolante (24) constituée de façon sensiblement cylindrique, ou de façon légèrement conique qui présente des électrodes de commande conductrices (25, 26) formées du côté frontal,
caractérisé en ce que
• les électrodes de commande (25, 26) sont réalisées en une matière élastomère semi-conductrice et sont formées dans la pièce isolante (24) du côté frontal, et
• l'on constitue une électrode de commande (26) avec une pièce qui conduit au potentiel de la masse, de préférence le carter (17), l'autre électrode de commande (25) étant constituée de façon à entrer en liaison conductrice avec le contact (20) qui fait passer la tension.

2. Connecteur électrique à haute tension selon la revendication 1,
caractérisé en ce que
les électrodes de commande (25, 26) sont constituées sous la forme d'anneaux ayant une section transversale de forme sensiblement conique, dont les pointes (27, 28) sont arrondies et dont les parois latérales (30, 31), tournées vers le centre, sont de préférence orientées parallèlement à l'axe (29).

3. Connecteur électrique à haute tension selon la revendication 1 ou 2,
caractérisé en ce que
les électrodes de commande (25, 26) présentent un système de ventilation.

4. Connecteur électrique à haute tension selon l'une des revendications précédentes,
caractérisé en ce que
la cavité (18) présente une ou plusieurs chambres d'équilibrage de volume (36).

5. Connecteur électrique à haute tension selon la revendication 4,
caractérisé en ce que
la configuration des électrodes de commande (25, 26) permet de décharger électriquement les chambres d'équilibrage de volume (36).

6. Connecteur électrique à haute tension selon l'une des revendications précédentes,
caractérisé en ce que
la pièce élastique isolante (24) peut être insérée dans une cavité venue de fonderie (18) d'un carter de transformateur (17).

7. Connecteur électrique à haute tension selon l'une des revendications précédentes,
caractérisé en ce que
au fond de la cavité (18) est prévu, comme prise de tension un contact (20) qui fait passer la tension.

8. Connecteur électrique à haute tension selon l'une des revendications précédentes,
caractérisé en ce qu'
on l'utilise pour prélever un signal électronique à l'endroit d'un raccordement de câble (2) à cône extérieur, à travers un transformateur de mesure (1), le corps (4) du transformateur ayant une forme qui s'écarte d'une forme rectangulaire au moins du côté du raccordement de câble suivant, d'une manière telle que le raccordement de câble qui se trouve à côté puisse être garni librement.

9. Connecteur électrique à haute tension selon l'une des revendications précédentes,
caractérisé en ce que
le corps (4) du transformateur comprend pour prélever le signal électrique un point électrique d'entrée de signaux (5) qui, dans le cas où le corps (4) du transformateur est disposé sur le carter de l'installation de distribution électrique (3), s'adapte à un point électrique de sortie de signaux (7) du raccordement de câble (2) à cône extérieur.

10. Connecteur électrique à haute tension selon l'une des revendications précédentes,
caractérisé en ce que
le point électrique d'entrée de signaux (5) est un contact électrique qui s'adapte à un contact opposé sur le raccordement de câble (2) à cône extérieur, constituant le point électrique de sortie de signaux (7).

11. Connecteur électrique à haute tension selon l'une des revendications précédentes,
caractérisé en ce que
le point électrique d'entrée de signaux (5) est le premier membre d'un point d'entrée, opérant une séparation de façon galvanique, dont le membre est le point de sortie de signaux (7) sur le corps (4) du transformateur.
